# EUROPEAN PATENT APPLICATION

(11) **EP 4 488 299 A1**
(43) Date of publication of application: **08.01.2025**
(21) Application number: 23779585.1
(22) Date of filing: 14.03.2023
(51) Int. Cl.: C08F 2/44, C08F 2/48, B33Y 80/00, B29C 64/124, B33Y 70/00

(54) **PHOTOCURABLE COMPOSITION, THREE-DIMENSIONAL SHAPED ARTICLE, AND DENTAL PRODUCT**

(30) Priority: 28.03.2022 JP 2022052230
(71) Applicant: Mitsui Chemicals, Inc., Tokyo 104-0028 (JP)
(72) Inventor: KIMURA, Mai, Sodegaura-shi, Chiba 299-0265 (JP); SAKAMAKI, Toshikazu, Sodegaura-shi, Chiba 299-0265 (JP)
(74) Representative: Hoffmann Eitle
(86) International application number: PCT/JP2023/009957
(87) International publication number: WO 2023/189567

(57) **Abstract**

A photocurable composition, comprising a photopolymerizable component and a photopolymerization initiator, further comprising a filler wherein: in a case in which a square plate shaped test piece A1 with a length of 10 mm, a width of 10 mm, and a thickness of 2 mm, is produced, at least one square surface B1 having an area of 3 µm on a side in at least one cross section of the test piece A1 has a sea-island structure composed of island portions comprising the filler and having a length of 0.1 µm or more, and a sea portion, an average surface elastic modulus of the island portions is 9.0 GPa or more, an average surface elastic modulus of the sea portion is 4.5 GPa or more, an area of the island portions is from 1.0% to 15.0% with respect to an entire area of the surface B1, and an area of the sea portion is from 85.0% to 99.0% with respect to the entire area of the surface B1.

## Description

### Technical Field

The present disclosure relates to a photocurable composition, a three-dimensional modeling product, and a dental product.

### Background Art

Dental products such as dental prostheses and instruments for intraoral use have been studied in recent years. For example, in terms of the efficiency of modeling these dental products, methods of producing a three-dimensional modeling product such as a dental product by photomodeling using a 3D printer have been known (see, for example, Patent Document 1).

Patent Document 1: Japanese Patent No. 4160311

### SUMMARY OF INVENTION

### Technical Problem

However, a three-dimensional modeling product produced by photomodeling using a photocurable composition may wear when used in the oral cavity or discolor when worn out. Furthermore, when modeling a three-dimensional object produced by photomodeling, the object may be washed with isopropyl alcohol, which may cause the object to whiten.

Therefore, it is desirable that a photocurable composition can produce a three-dimensional object that is suppressed from abrasion and discoloration upon abrasion, and that is less likely to whiten when washed with isopropyl alcohol.

An object of one aspect of the present disclosure is to provide a photocurable composition capable of producing a three-dimensional modeling product that is suppressed from abrasion and discoloration upon abrasion and is resistant to whitening when washed with isopropyl alcohol, a three-dimensional modeling product and a dental product that are obtained from this photocurable composition.

### Solution to Problem

Means for solving the above-described problems include the following aspects.
<1> A photocurable composition, comprising a photopolymerizable component and a photopolymerization initiator, further comprising a filler wherein:
   in a case in which a square plate shaped test piece A1 with a length of 10 mm, a width of 10 mm, and a thickness of 2 mm, is produced by photomodeling under conditions in which the photocurable composition is irradiated with visible light having a wavelength of 405 nm at an irradiation dose of 12 mJ/cm² to form a cured layer A1 with a thickness of 100 µm, the cured layer A1 is stacked in a thickness direction thereof to form a square plate shaped modeling product A1 with a length of 10 mm, a width of 10 mm, and a thickness of 2 mm, and the modeling product A1 is irradiated with ultraviolet rays having a wavelength of 365 nm at an irradiation dose of 10 J/cm² to produce the test piece A1, at least one square surface B1 having an area of 3 µm on a side in at least one cross section of the test piece A1 has a sea-island structure composed of island portions comprising the filler and having a length of 0.1 µm or more, and a sea portion consisting of the portion other than the island portions,
   an average surface elastic modulus of the island portions is 9.0 GPa or more,
   an average surface elastic modulus of the sea portion is 4.5 GPa or more,
   an area of the island portions in the surface B1 is from 1.0% to 15.0% with respect to an entire area of the surface B1, and
   an area of the sea portion in the surface B1 is from 85.0% to 99.0% with respect to the entire area of the surface B1 (a total of the area of the island portions and the area of the sea portion is 100%).
<2> The photocurable composition according to <1>, wherein the filler is at least one selected from the group consisting of silica particles, zirconia particles, aluminosilicate particles, alumina particles, and titania particles.
<3> The photocurable composition according to <1> or <2>, wherein the filler comprises a filler (1) having an average particle size of 5 nm or more and less than 100 nm and a filler (2) having an average particle size of from 0.1 µm to 3.0 µm.
<4> A photocurable composition, comprising a photopolymerizable component, a photopolymerization initiator and a filler, wherein:
   the filler comprises a filler (1) having an average particle size of 5 nm or more and less than 100 nm and a filler (2) having an average particle size of from 0.1 µm to 3.0 µm.
<5> The photocurable composition according to any one of <1> to <4>, wherein:
   in a case in which a discoid test piece A2 with a diameter of 15 mm and a thickness of 1 mm, is produced by photomodeling under conditions in which the photocurable composition is irradiated with visible light having a wavelength of 405 nm at an irradiation dose of 12 mJ/cm² to form a cured layer A2 with a thickness of 100 µm, the cured layer A2 is stacked in a thickness direction thereof to form a discoid modeling product A2 with a diameter of 15 mm and a thickness of 1 mm, and the modeling product A2 is irradiated with ultraviolet rays having a wavelength of 365 nm at an irradiation dose of 10 J/cm² to produce the test piece A2, the test piece A2 has a Vickers hardness of 18 HV or more.
<6> The photocurable composition according to any one of <1> to <5>, wherein:
   in a case in which a rectangular rod-like test piece A3 with a length of 25 mm, a width of 2 mm, and a thickness of 2 mm, is produced by photomodeling under conditions in which the photocurable composition is irradiated with visible light having a wavelength of 405 nm at an irradiation dose of 12 mJ/cm² to form a cured layer A3 with a thickness of 100 µm, the cured layer A3 is stacked in a thickness direction thereof to form a rectangular rod-like modeling product A3 with a length of 25 mm, a width of 2 mm, and a thickness of 2 mm, and the modeling product A3 is irradiated with ultraviolet rays having a wavelength of 365 nm at an irradiation dose of 10 J/cm² to produce the test piece A3, the test piece A3 has a bending strength of 80 MPa or more, and a bending elastic modulus of 3,000 MPa or more.
<7> The photocurable composition according to any one of <1> to <6>, wherein the photopolymerizable component comprises a (meth)acrylic monomer.
<8> The photocurable composition according to <7>, wherein:
   the (meth)acrylic monomer comprises at least one of a monofunctional (meth)acrylic monomer or a bifunctional (meth)acrylic monomer, and
   a total amount of the monofunctional (meth)acrylic monomer and the bifunctional (meth)acrylic monomer is 90% by mass or more with respect to a total amount of the (meth)acrylic monomer.
<9> The photocurable composition according to <7> or <8>, wherein the (meth)acrylic monomer comprises a bifunctional (meth)acrylic monomer.
<10> The photocurable composition according to any one of <1> to <9>, wherein a viscosity, which is measured by an E-type viscometer under the conditions of 25°C and 50 rpm, is from 300 mPa·s to 6,000 mPa·s.
<11> The photocurable composition according to any one of <1> to <10>, which is a photocurable composition for photomodeling.
<12> The photocurable composition according to any one of <1> to <11>, which is used for the production of a dental product by photomodeling.
<13> A three-dimensional modeling product, which is a cured product of the photocurable composition according to any one of <1> to <12>.
<14> A dental product, comprising the three-dimensional modeling product according to <13>.

### Advantageous Effects of Invention

According to one aspect of the present disclosure, a photocurable composition capable of producing a three-dimensional modeling product that is suppressed from abrasion and discoloration upon abrasion and is resistant to whitening when washed with isopropyl alcohol, a three-dimensional modeling product and a dental product that are obtained from this photocurable composition, can be provided.

### BRIEF DESCRIPTION OF DRAWING

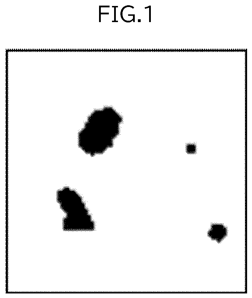

FIG. 1 is an image showing island portions and a sea portion in a surface B1 in at least one cross section of test piece A1.

### DESCRIPTION OF EMBODIMENTS

In the present disclosure, those numerical ranges that are expressed with "to" each denote a range that includes the numerical values stated before and after "to" as the lower limit value and the upper limit value, respectively.

In the present disclosure, the term "step" encompasses not only a discrete step but also a step that cannot be clearly distinguished from other steps, as long as the intended purpose of the step is achieved.

In the present disclosure, when there are plural substances that correspond to a component of a composition, the indicated amount of the component in the composition means, unless otherwise specified, a total amount of the plural substances existing in the composition.

In a set of numerical ranges that are stated in a stepwise manner in the present disclosure, the upper limit value or the lower limit value of one numerical range may be replaced with the upper limit value or the lower limit value of other numerical range. Further, in a numerical range stated in the present disclosure, the upper limit value or the lower limit value of the numerical range may be replaced with a relevant value indicated in any of Examples.

In the present disclosure, "light" is a concept that encompasses active energy rays such as ultraviolet rays and visible light beams.

In the present disclosure, "(meth)acrylate" refers to an acrylate or a methacrylate, "(meth)acryloyl" refers to acryloyl or methacryloyl, and "(meth)acryl" refers to acryl or methacryl.

### [Photocurable composition]

The photocurable composition of the present disclosure is a photocurable composition containing a photopolymerizable component and a photopolymerization initiator, the photocurable composition further contains a filler,
in a case in which a square plate shaped test piece A1 with a length of 10 mm, a width of 10 mm, and a thickness of 2 mm, is produced by photomodeling under conditions in which the photocurable composition is irradiated with visible light having a wavelength of 405 nm at an irradiation dose of 12 mJ/cm² to form a cured layer A1 with a thickness of 100 µm, the cured layer A1 is stacked in a thickness direction thereof to form a square plate shaped modeling product A1 with a length of 10 mm, a width of 10 mm, and a thickness of 2 mm, and the modeling product A1 is irradiated with ultraviolet rays having a wavelength of 365 nm at an irradiation dose of 10 J/cm² to produce the test piece A1, at least one square surface B1 having an area of 3 µm on a side in at least one cross section of the test piece A1 has a sea-island structure composed of island portions comprising the filler and having a length of 0.1 µm or more, and a sea portion consisting of the portion other than the island portions,
an average surface elastic modulus of the island portions is 9.0 GPa or more,
an average surface elastic modulus of the sea portion is 4.5 GPa or more,
an area of the island portions in the surface B1 is from 1.0% to 15.0% with respect to an entire area of the surface B1, and
an area of the sea portion in the surface B1 is from 85.0% to 99.0% with respect to the entire area of the surface B1 (a total of the area of the island portions and the area of the sea portion is 100%).

It is possible to produce a three-dimensional modeling product that is suppressed from abrasion and discoloration upon abrasion and is resistant to whitening when washed with isopropyl alcohol (IPA) by using the photocurable composition of the present disclosure. This reason is presumed as below. However, the following presumption is not intended to limit the photocurable composition of the present disclosure, and is merely an example.

When in the photocurable composition of the present disclosure, a square plate shaped test piece A1 with a length of 10 mm, a width of 10 mm, and a thickness of 2 mm, is produced by photomodeling, at least one square surface B1 having an area of 3 µm on a side in at least one cross section of the test piece A1 has a sea-island structure composed of island portions comprising the filler and having a length of 0.1 µm or more, and a sea portion consisting of the portion other than the island portions. The discoloration upon abrasion tends to be suppressed since the island portions has an average surface elastic modulus of 9.0 GPa or more, and an area of the island portions is 1.0% or more with respect to an entire area of the surface B1. The three-dimensional modeling product tends to be resistant to whitening when washed with IPA since the aforementioned area of the island portions is 15.0% or less with respect to an entire area of the surface B1. The abrasion tends to be suppressed since the sea-island structure has the sea portion with an average surface elastic modulus of 4.5 GPa or more, and the aforementioned island portions.

### <Use>

The use of the photocurable composition of the present disclosure is not particularly limited.

From the standpoint of allowing the effect of improving the modeling accuracy of a three-dimensional modeling product to be more effectively exerted, the photocurable composition of the present disclosure is preferably a photocurable composition for photomodeling.

From the standpoint of allowing the effect of improving the thickness accuracy of a three-dimensional modeling product to be more effectively exerted, the photocurable composition of the present disclosure is more preferably a photocurable composition for vat photomodeling (e.g., DLP or SLA photomodeling, preferably DLP photomodeling).

Moreover, from the standpoint of allowing the effect of improving the modeling accuracy of a three-dimensional modeling product to be more effectively exerted, the photocurable composition of the present disclosure is preferably a photocurable composition used for the production of a dental product.

The dental product is, for example, a dental prosthesis, a medical instrument for intraoral use, a dental model, or a lost-foam casting model.

Examples of the dental prosthesis include an artificial tooth, a denture base, an inlay, a crown, a bridge, a temporary crown, and a temporary bridge.

Examples of the medical instrument for intraoral use include a mouthpiece, a mouthguard, an orthodontic appliance, a bite splint, an impression tray, and a surgical guide.

Examples of the dental model include a jaw model.

### <<Photomodeling>>

As photomodeling, vat photomodeling (i.e., photomodeling using a vat) is known.

In vat photomodeling, a photocurable composition (i.e., an uncured photocurable composition in a liquid state; the same applies below) housed in a vat is partially cured by photoirradiation to form a cured layer, and the cured layer is disposed on one another by repeating this operation, whereby a three-dimensional modeling product is obtained. Vat photomodeling is different from inkjet photomodeling in that it uses a vat.

Vat photomodeling is broadly classified into DLP (Digital Light Processing) photomodeling and SLA (Stereolithography) photomodeling. In DLP photomodeling, a photocurable composition in a vat is irradiated with planar light. In SLA photomodeling, laser light is scanned over a photocurable composition in a vat.

In one example of DLP photomodeling, for example, a 3D printer (e.g., "CARA PRINT 4.0" manufactured by Kulzer GmbH, or "MAX UV" manufactured by Asiga) that includes the followings is employed:
a vertically movable build table;
a tray (i.e., a vat) which is arranged below the build table (on the side of the gravity direction; the same applies below) and which includes a light transmitting section and houses a photocurable composition; and
a light source (e.g., an LED light source) which is arranged below the tray and used for irradiating the photocurable composition in the tray with planar light through the light transmitting section of the tray.
In this example, first, a gap equivalent to a single layer is created between the build table and the tray, and this gap is filled with a photocurable composition. Next, the photocurable composition filling the gap is irradiated with planar light from below through the light transmitting section of the tray to cure the light-irradiated region, whereby a first cured layer is formed. Subsequently, the gap between the build table and the tray is expanded for another layer to be formed next, and the resulting space is filled with the photocurable composition. Then, the photocurable composition filling the space is irradiated with light in the same manner as in the curing of the first layer to form a second cured layer. The above-described operations are repeated to dispose cured layers on one another, whereby a three-dimensional modeling product is produced. In this example, the thus produced three-dimensional modeling product may be further irradiated with light and thereby further cured.

In vat photomodeling, when a component contained in the photocurable composition is difficult to disperse in the composition and tend to settle, photomodeling may be performed while appropriately interspersing stirring, for example, by stirring each time a layer is modeled.

### <Physical properties of test piece A1>

In a case in which a square plate shaped test piece A1 with a length of 10 mm, a width of 10 mm, and a thickness of 2 mm, is produced by photomodeling under conditions in which the photocurable composition is irradiated with visible light having a wavelength of 405 nm at an irradiation dose of 12 mJ/cm² to form a cured layer A1 with a thickness of 100 µm, the cured layer A1 is stacked in a thickness direction thereof to form a square plate shaped modeling product A1 with a length of 10 mm, a width of 10 mm, and a thickness of 2 mm, and the modeling product A1 is irradiated with ultraviolet rays having a wavelength of 365 nm at an irradiation dose of 10 J/cm² to produce the test piece A1, at least one square surface B1 having an area of 3 µm on a side in at least one cross section of the test piece A1 has a sea-island structure composed of island portions containing the filler and having a length of 0.1 µm or more, and a sea portion consisting of the portion other than the island portions.

The aforementioned island portions contains a filler and has a length of 0.1 µm or more, and an area of the island portions in the surface B1 is from 1.0% to 15.0% with respect to an entire area of the surface B1. Further, the average surface elastic modulus of the island portions is 9.0 GPa or more.

The aforementioned sea portion consists of the portion other than the island portions, and an area of the sea portion in the surface B1 is from 85.0% to 99.0% with respect to the entire area of the surface B1 (a total of the area of the island portions and the area of the sea portion is 100%). Further, the average surface elastic modulus of the sea portion is 4.5 GPa or more.

For example, the area of the island portions and the area of the sea portion in the surface B1, the average surface elastic modulus of the island portions, and the average surface elastic modulus of the sea portion can be determined as follows.

First, a cross section of the prepared test piece A1 is taken out by ion milling. Thereafter, a surface shape image is obtained using an AFM (atomic force microscope) measurement device. Then, using image analysis software, in one square surface B1 having an area of 3 µm on a side in the cross section, an image is obtained in which island portions having a length (maximum width) of 0.1 µm or more and sea portions consisting of the portion other than the island portions are distinguished in black and white, and the area ratio of each of the island portions and the sea portion is calculated. Thereafter, for surface B1, the average surface elastic modulus of each of the island portions and the sea portion is calculated.

For example, by using image analysis software, it is possible to obtain an image in which island portions and sea portion are distinguished in black and white as shown in FIG. 1. The black portions in FIG. 1 correspond to the island portions, and the white portion corresponds to the sea portion.

The method for identifying the island portions and sea portion on surface B1 is as follows.

First, the gradation is determined for each pixel of a general image digital file (gray scale, for example, 256 gradations) such as JPEG, and the number of pixels and the gradation are formed into a histogram. Then, the average gradation of the entire image is determined, and binarization processing is performed using the average gradation as a threshold, and surface B1 is divided into two types of regions: gradations above the threshold (i.e., gradations on the bright side, hereinafter referred to as the "X1 region"), and gradations below the threshold (i.e., gradations on the dark side, hereinafter referred to as the "Y1 region"). Then, the length (that is, the maximum width) of the Y1 region surrounded by the X1 region on the surface B1 is measured, and the Y1 region having a length of 0.1 µm or more is identified as an island portion. Furthermore, the entire area other than the island areas on the surface B1 is identified as the ocean area.

In addition, when the Y1 area that may correspond to an island part on the surface B1 is formed adjacent to the side of the surface B1, the accurate Y1 area cannot be measured because the area is cut off at the side. In some cases, it may not be possible to determine whether the Y1 region is an island portion.

In such a case, it is determined whether or not it is an island portion or not on the square surface B2 having the surface B1 at the center and having an area of 9 µm on each side in the same manner as described above.

That is, the gradation is determined for each pixel of a general image digital file (gray scale, for example, 256 gradations) such as JPEG, and the number of pixels and the gradation are formed into a histogram. Then, the average gradation of the entire image is determined, and binarization processing is performed using the average gradation as a threshold, and surface B2 is divided into two types of regions: gradations above the threshold (i.e., gradations on the bright side, hereinafter referred to as the "X2 region"), and gradations below the threshold (i.e., gradations on the dark side, hereinafter referred to as the "Y2 region"). Then, the length (that is, the maximum width) of the Y2 region surrounded by the X2 region on the surface B2 is measured, and the Y2 region having a length of 0.1 µm or more is identified as an island portion. Furthermore, the entire area other than the island area on the surface B2 is identified as the sea portion. Then, among the island portions and the sea portion in the surface B2, the island portions and the sea portion in the surface B1 are specified, and the average surface elastic modulus of each portion is measured.

Note that due to a factor in image output, the images to be used may be output as different brightnesses even though they actually have the same brightness. For example, the left side and right side of an image may be output as different brightnesses even though they actually have the same brightness, or moving from the left side to the right side in the image, the image may appear to get gradually brighter, even though the image actually has the same brightness. In such a case, it is preferable to perform background correction, then perform histogram formation, average gradation calculation, and binarization processing to calculate the area fraction of the bright portion.

Specifically, the average surface elastic modulus of each of the island portions and the sea portion is calculated using the following method.

Regarding surface B1, the area of the surface B1 is divided so that the total number of measurement points is 16384 points (128×128), and the surface elastic modulus is measured for the measurement points in each area. The average surface elastic modulus of each of the island portions and sea portion is determined by randomly selecting 10 measurement points for each of the island portions and sea portion on surface B1, and averaging the 10 measurement points for each of the island portions and sea portion.

The surface elastic modulus is measured, for example, by measuring the surface shape image of surface B1 using AFM-5300E (Hitachi High-Tech Science Co., Ltd.) in force curve mapping (FCM) mode (more specifically, force volume mode).

The specific measurement conditions for the surface elastic modulus are as follows.
Cantilever material: silicone
Cantilever probe size: 7nm
Cantilever spring constant: 9N/m
Cantilever indentation depth: 10nm
Measurement environment: in the atmosphere, 25°C

From the standpoint of more suppressing the discoloration upon abrasion and whitening when washed with IPA, the area of the island portions in the surface B1 is preferably from 1.5% to 13.0%, more preferably from 2.0% to 12.0%, and still more preferably from 4.0% to 10.0%, with respect to the entire area of the surface B1.

From the standpoint of more suppressing the discoloration upon abrasion and whitening when washed with IPA, the area of the sea portion in the surface B1 is preferably from 87.0% to 98.5%, more preferably from 88.0% to 98.0%, and still more preferably from 90.0% to 96.0%, with respect to the entire area of the surface B1.

The average surface elastic modulus of the island portions may be 9.2 GPa or more, or may be 9.5 GPa or more.

The upper limit of the average surface elastic modulus of the island portions is not particularly limited, and for example, may be 20.0 GPa or less, or may be 15.0 GPa or less.

The average surface elastic modulus of the sea portion may be 4.8 GPa or more, or may be 5.0 GPa or more.

The upper limit of the average surface elastic modulus of the sea portion is not particularly limited, and for example, may be 10.0 GPa or less, or may be 7.0 GPa or less.

The average surface elastic modulus of the island portions and the area ratio of the island portions can be adjusted by a filler contained in the photocurable composition.

For example, by using the filler (2) having an average particle size of from 0.1 µm to 3.0 µm, the average surface elastic modulus of the island portions can be easily adjusted to 9.0 GPa or more.

Furthermore, by increasing the amount used of the aforementioned filler (2), the area ratio of the island portions tends to increase (in other words, the area ratio of the sea portion tends to decrease).

The average surface elastic modulus of the sea portion can be adjusted by a photopolymerizable component and a filler contained in the photocurable composition.

For example, by increasing the amount used of the filler (1) having an average particle size of 5 nm or more and less than 100 nm, the average surface elastic modulus of the sea portion tends to increase. Therefore, by using the filler (1), the average surface elastic modulus of the sea portion can be easily adjusted to 4.5 GPa or more.

Furthermore, by using a photopolymerizable component that can produce a relatively hard cured product among photopolymerizable components, the average surface elastic modulus of the sea portion tends to increase. For example, by increasing the ratio of a polyfunctional (e.g., bifunctional) photopolymerizable component with respect to a monofunctional photopolymerizable component, the average surface elastic modulus of the sea portion tends to increase.

The average surface elastic modulus of the sea portion can also be adjusted by the molecular structure of the photopolymerizable component. For example, by using a polyfunctional (e.g., bifunctional) photopolymerizable component having a small molecular weight, the average surface elastic modulus of the sea portion tends to increase, and by using a polyfunctional (e.g., bifunctional) photopolymerizable component having a large molecular weight, the average surface elastic modulus of the sea portion tends to decrease.

### <Vickers hardness of test piece A2>

In a case in which a discoid test piece A2 with a diameter of 15 mm and a thickness of 1 mm, is produced by photomodeling under conditions in which the photocurable composition is irradiated with visible light having a wavelength of 405 nm at an irradiation dose of 12 mJ/cm² to form a cured layer A2 with a thickness of 100 µm, the cured layer A2 is stacked in a thickness direction thereof to form a discoid modeling product A2 with a diameter of 15 mm and a thickness of 1 mm, and the modeling product A2 is irradiated with ultraviolet rays having a wavelength of 365 nm at an irradiation dose of 10 J/cm² to produce the test piece A2, the test piece A2 preferably has a Vickers hardness of 18 HV or more.

When the Vickers hardness of the test piece A2 is 18 HV or more, a three-dimensional modeling product (e.g., a dental product) produced from the photocurable composition of the present disclosure has superior hardness.

The Vickers hardness of the test piece A2 is more preferably 20 HV or more.

The upper limit of the Vickers hardness of the test piece A2 is not particularly limited; however, it is, for example, 30 HV or 26 HV.

It is noted here that the conditions for the production of a three-dimensional modeling product using the photocurable composition of the present disclosure do not necessarily have to be the same as the conditions for the production of the test piece A2. Even when the conditions for the production of a three-dimensional modeling product are different from the conditions for the production of the test piece A2, there is a correlation between the Vickers hardness of the test piece A2 and the hardness of a three-dimensional modeling product.

In other words, the Vickers hardness of the test piece A2 is an index of the hardness of a three-dimensional modeling product produced from the photocurable composition of the present disclosure.

The test piece A2 can be produced, for example, in accordance with the aforementioned example of DLP photomodeling.

The Vickers hardness of the test piece A2 is measured in accordance with JIS T6517:2011.

Specifically, the test piece A2 is immersed in purified water at 37 ± 1°C for 24 ± 2 hours.

Subsequently, the test piece A2 is recovered from purified water, and the Vickers hardness of the light-irradiated surface (i.e., the surface of the side irradiated with light at the time of production) of the recovered test piece A2 is measured in accordance with the Vickers hardness test method prescribed in JIS Z2244 at a test force of 200 g. The thus obtained value is defined as the Vickers hardness of the test piece A2.

### <Bending strength of test piece A3>

In a case in which a rectangular rod-like test piece A3 with a length of 25 mm, a width of 2 mm, and a thickness of 2 mm, is produced by photomodeling under conditions in which the photocurable composition is irradiated with visible light having a wavelength of 405 nm at an irradiation dose of 12 mJ/cm² to form a cured layer A3 with a thickness of 100 µm, the cured layer A3 is stacked in a thickness direction thereof to form a rectangular rod-like modeling product A3 with a length of 25 mm, a width of 2 mm, and a thickness of 2 mm, and the modeling product A3 is irradiated with ultraviolet rays having a wavelength of 365 nm at an irradiation dose of 10 J/cm² to produce the test piece A3, the test piece A3 preferably has a bending strength of 80 MPa or more.

When the bending strength of the test piece A3 is 80 MPa or more, a three-dimensional modeling product (e.g., a dental product) produced from the photocurable composition of the present disclosure has superior bending strength.

The bending strength of the test piece A3 is more preferably 90 MPa or more.

The upper limit of the bending strength of the test piece A3 is not particularly limited; and, it is, for example, 150 MPa.

It is noted here that the conditions for the production of a three-dimensional modeling product using the photocurable composition of the present disclosure do not necessarily have to be the same as the conditions for the production of the test piece A3. Even when the conditions for the production of a three-dimensional modeling product are different from the conditions for the production of the test piece A3, there is a correlation between the bending strength of the test piece A3 and the bending strength of a three-dimensional modeling product.

In other words, the bending strength of the test piece A3 is an index of the bending strength of a three-dimensional modeling product produced from the photocurable composition of the present disclosure.

The test piece A3 can be produced, for example, in accordance with the aforementioned example of DLP photomodeling.

The bending strength of the test piece A3 is measured as follows.

The test piece A3 is immersed in purified water at 37 ± 1°C for 24 ± 2 hours.

Subsequently, the test piece A3 is recovered from purified water, and the bending strength of the recovered test piece A3 is measured in accordance with ISO10477:2004 at a test speed of 1 ± 0.3 mm/min.

### <Bending elastic modulus of test piece A3>

In a case in which a rectangular rod-like test piece A3 with a length of 25 mm, a width of 2 mm, and a thickness of 2 mm, is produced by photomodeling under conditions described in <Bending strength of test piece A3>, the test piece A3 preferably has a bending elastic modulus of 3,000 MPa or more.

When the bending elastic modulus of the test piece A3 is 3,000 MPa or more, a three-dimensional modeling product (e.g., a dental product) produced from the photocurable composition of the present disclosure has superior bending elastic modulus.

The bending elastic modulus of the test piece A3 is more preferably 4,000 MPa or more.

The upper limit of the bending elastic modulus of the test piece A3 is not particularly limited; however, it is, for example, 6,000 MPa.

It is noted here that the conditions for the production of a three-dimensional modeling product using the photocurable composition of the present disclosure do not necessarily have to be the same as the conditions for the production of the test piece A3. Even when the conditions for the production of a three-dimensional modeling product are different from the conditions for the production of the test piece A3, there is a correlation between the bending elastic modulus of the test piece A3 and the bending elastic modulus of a three-dimensional modeling product.

In other words, the bending elastic modulus of the test piece A3 is an index of the bending elastic modulus of a three-dimensional modeling product produced from the photocurable composition of the present disclosure.

The bending elastic modulus of the test piece A3 is measured as follows.

The test piece A3 is immersed in purified water at 37 ± 1°C for 24 ± 2 hours.

Subsequently, the test piece A3 is recovered from purified water, and the bending elastic modulus of the recovered test piece A3 is measured in accordance with ISO10477:2004 at a test speed of 1 ± 0.3 mm/min.

### (Photopolymerizable component)

The photocurable composition of the present disclosure contains at least one kind of photopolymerizable component.

The photopolymerizable component is, for example, a compound containing an ethylenic double bond.

Examples of the compound containing an ethylenic double bond include a (meth)acrylic monomer, styrene, a styrene derivative, and (meth)acrylonitrile.

As the photopolymerizable component, any of the photopolymerizable components described in the paragraphs [0030] to [0059] of WO 2019/189652 may be used as well.

The photopolymerizable component preferably contains at least one kind of (meth)acrylic monomer.

In this case, a total ratio of the (meth)acrylic monomer with respect to the whole photopolymerizable component is preferably 80% by mass or more, more preferably 90% by mass or more, and still more preferably 95% by mass or more.

The upper limit of the total ratio of the (meth)acrylic monomer with respect to the whole photopolymerizable component is not particularly limited and for example, may be 100% by mass or less.

The (meth)acrylic monomer may be any monomer as long as it contains one or more (meth)acryloyl groups in the molecule, and there is no other particular limitation.

The (meth)acrylic monomer may be a monofunctional (meth)acrylic monomer (i.e., a monomer having one (meth)acryloyl group in the molecule), a bifunctional (meth)acrylic monomer (i.e., a monomer having two (meth)acryloyl groups in the molecule), or a polyfunctional (meth)acrylic monomer (i.e., a monomer having three or more (meth)acryloyl groups in the molecule).

The (meth)acrylic monomer preferably contains at least one of an aromatic structure (e.g., a bisphenol A structure), an alicyclic structure, or a urethane bond in the molecule.

The (meth)acrylic monomer of this preferred aspect may further contain at least one of an ethyleneoxy group or a propyleneoxy group.

The molecular weight of the (meth)acrylic monomer is preferably 5,000 or less, more preferably 3,000 or less, still more preferably 2,000 or less, yet still more preferably 1,500 or less, further more preferably 1,000 or less, still further more preferably 800 or less.

The lower limit of the molecular weight of the (meth)acrylic monomer is not particularly limited as long as the (meth)acrylic monomer is a monomer that contains one or more (meth)acryloyl groups in the molecule. The lower limit of the molecular weight of the (meth)acrylic monomer is, for example, 86, preferably 100, more preferably 200, and still more preferably 300.

From the standpoint of reducing the viscosity of the photocurable composition, the (meth)acrylic monomer that may be contained in the photocurable composition of the present disclosure preferably contains at least one of a monofunctional (meth)acrylic monomer or a bifunctional (meth)acrylic monomer. Further, the use of a monofunctional (meth)acrylic monomer tends to increase the toughness of the cured product, while the use of a polyfunctional (meth)acrylic monomer tends to accelerate curing and increase the average surface elastic modulus of the sea portion.

In this case, from the standpoint of reducing the viscosity of the photocurable composition, the total amount of the monofunctional (meth)acrylic monomer and the bifunctional (meth)acrylic monomer is preferably 60% by mass or more, more preferably 80% by mass or more, and still more preferably 90% by mass or more, with respect to the total amount of the (meth)acrylic monomer that may be contained in the photocurable composition of the present disclosure.

The upper limit of the total amount of the monofunctional (meth)acrylic monomer and the bifunctional (meth)acrylic monomer is not particularly limited, and for example, may be 100% by mass or less.

Specific examples of the monofunctional (meth)acrylic monomer include cyclohexyl (meth)acrylate, isobornyl (meth)acrylate, dicyclopentanyl (meth)acrylate, dicyclopentenyl (meth)acrylate, 4-tert-butylcyclohexyl (meth)acrylate, tetrahydrofurfuryl (meth)acrylate, (2-methyl-2-ethyl-1,3-dioxolan-4-yl)methyl (meth)acrylate, cyclic trimethylolpropane formal (meth)acrylate, 4-(meth)acryloyl morpholine, lauryl (meth)acrylate, 4-hydroxybutyl (meth)acrylate, 2-hydroxyethyl (meth)acrylate, benzyl (meth)acrylate, 2-phenoxyethyl (meth)acrylate, 3-phenoxybenzyl (meth)acrylate, 2-hydroxy-3-phenoxypropyl (meth)acrylate, phenoxyethylene glycol (meth)acrylate, 2-dodecyl-1-hexadecanyl (meth)acrylate, 2-(meth)acryloyloxyethyl succinate, 2-[[(butylamino)carbonyl]oxy]ethyl (meth)acrylate, and 2-(2-ethoxyethoxy)ethyl (meth)acrylate.

Specific examples of the bifunctional (meth)acrylic monomer include ethylene glycol di(meth)acrylate, triethylene glycol di(meth)acrylate, glycerol di(meth)acrylate, 1,6-hexanediol di(meth)acrylate, ethoxylated bisphenol A di(meth)acrylate, dimethylol-tricyclodecane di(meth)acrylate, 1,9-nonanediol di(meth)acrylate, dioxane glycol di(meth)acrylate, diethylene glycol di(meth)acrylate, dipropylene glycol di(meth)acrylate, ethoxylated bisphenol A di(meth)acrylate, ethoxylated hydrogenated bisphenol A di(meth)acrylate, 2-hydroxy-3-acryloyloxypropyl (meth)acrylate, bis(2-(meth)acryloxyethyl)-*N,N'*-1,9-nonylene biscarbamate (diurethane (meth)acrylate), polyethylene glycol di(meth)acrylate, and polypropylene glycol di(meth)acrylate.

From the standpoint of further facilitating the curing of the photocurable composition and further improving the modeling accuracy of a three-dimensional modeling product, the (meth)acrylic monomer that may be contained in the photocurable composition of the present disclosure preferably contains a bifunctional (meth)acrylic monomer.

In this case, from the standpoint of further facilitating the curing of the photocurable composition and further improving the modeling accuracy of a modeling product, the total amount of the bifunctional (meth)acrylic monomer is preferably 30% by mass or more, more preferably 40% by mass or more, and still more preferably 50% by mass or more, with respect to the total amount of the (meth)acrylic monomer that may be contained in the photocurable composition of the present disclosure.

The upper limit of the total amount of the bifunctional (meth)acrylic monomer is not particularly limited, may be 100% by mass or less, or may be 80% by mass or less.

From the standpoint of further facilitating the curing of the photocurable composition and further improving the modeling accuracy of a modeling product, the (meth)acrylic monomer that may be contained in the photocurable composition of the present disclosure more preferably contains:
a monomer M1, which is a bifunctional (meth)acrylic monomer containing at least one of an aromatic ring structure (e.g., a bisphenol A structure) or an alicyclic structure in the molecule; and/or
a monomer M2, which is a bifunctional (meth)acrylic monomer containing a urethane bond in the molecule.

In this case, the total amount of the monomer M1 and the monomer M2 is preferably 30% by mass or more, more preferably 40% by mass or more, and still more preferably 50% by mass or more, with respect to the total amount of the (meth)acrylic monomer that may be contained in the photocurable composition of the present disclosure.

The upper limit of the total amount of the monomer M1 and the monomer M2 is not particularly limited, may be 100% by mass or less, or may be 80% by mass or less.

The amount of the photopolymerizable component contained in the photocurable composition of the present disclosure is not particularly limited.

From the standpoint of further improving the modeling accuracy of a three-dimensional modeling product, the content of the photopolymerizable component is preferably 40 parts by mass or more, more preferably 50 parts by mass or more, and still more preferably 60 parts by mass or more, with respect to 100 parts by mass of the photocurable composition.

The upper limit of the content of the photopolymerizable component is not particularly limited, may be 90 parts by mass or less, or may be 80 parts by mass or less, with respect to 100 parts by mass of the photocurable composition.

### (Photopolymerization initiator)

The photocurable composition of the present disclosure contains at least one kind of photopolymerization initiator.

Examples of the photopolymerization initiator include an alkylphenone compound, an acylphosphine oxide compound, a titanocene compound, an oxime ester compound, a benzoin compound, a acetophenone compound, a benzophenone compound, a thioxanthone compound, an *α*-acyloxime ester compound, a phenyl glyoxylate compound, a benzyl compound, an azo compound, a diphenyl sulfide compound, an iron-phthalocyanine compound, a benzoin ether compound, and an anthraquinone compound.

From the standpoint of the reactivity, the photopolymerization initiator preferably contains at least one selected from the group consisting of an alkylphenone compound and an acylphosphine oxide compound.

From the standpoint of improving the modeling accuracy of a three-dimensional modeling product, the photopolymerization initiator preferably contains an acylphosphine oxide compound (e.g., 2,4,6-trimethylbenzoyl-diphenyl-phosphine oxide or bis(2,4,6-trimethylbenzoyl)phenyl phosphine oxide), more preferably contains 2,4,6-trimethylbenzoyl-diphenyl-phosphine oxide.

The amount of the photopolymerization initiator contained in the photocurable composition of the present disclosure is preferably from 0.1 parts by mass to 20 parts by mass, more preferably from 0.2 parts by mass to 10 parts by mass, still more preferably from 0.3 parts by mass to 5 parts by mass, and yet still more preferably from 0.3 parts by mass to 3 parts by mass, with respect to 100 parts by mass of the photopolymerizable component.

### (Filler)

The photocurable composition of the present disclosure further contains a filler.

The photocurable composition may contain one type of filler alone or two or more types of fillers.

The photocurable composition of the present disclosure contains two or more types fillers, or may contain a filler having a smaller average particle size and a filler having a larger average particle size. For example, The filler may contain a filler (1) having an average particle size of 5 nm or more and less than 100 nm and a filler (2) having an average particle size of from 0.1 µm to 3.0 µm. In a case in which the photocurable composition of the present disclosure contains the filler (1) and the filler (2), it is preferable that when a cured product (e.g., the above-mentioned test piece A1) is produced by photomodeling using the photocurable composition of the present disclosure, in the sea-island structure formed in the cured product, the filler (1) having a smaller average particle size is mainly present in the sea portion, and the island portions are formed by the filler (2) having a larger average particle size.

In the present disclosure, the average particle size of the filler means the number-average primary particle size, specifically a value determined as follows.

A cured product (e.g., the above-described test piece A1) of the photocurable composition of the present disclosure is obtained by photomodeling, and a cross-section is subsequently cut out from the cured product. A TEM image of the thus obtained cross-section is taken, and 100 particles are randomly selected. The circle equivalent diameters of these particles are determined, and the arithmetic mean (number-average) of the thus determined circle equivalent diameters is calculated.

When the photocurable composition of the present disclosure contains the filler (1) and the filler (2), an average particle size of the filler (1) and an average particle size of the filler (2) may be determined as follows.

A cured product (e.g., the above-described test piece A1) of the photocurable composition of the present disclosure is obtained by photomodeling, and a cross-section is subsequently cut out from the cured product. A TEM image of the thus obtained cross-section is taken, and, in the filler (1) contained in the sea portion, 100 particles are randomly selected. The circle equivalent diameters of these particles are determined, the arithmetic mean (number-average) of the thus determined circle equivalent diameters is calculated and the average particle size of the filler (1) can be obtained. A TEM image of the thus obtained cross-section is taken, and, in the filler (2) contained in the island portions, 100 particles are randomly selected. The circle equivalent diameters of these particles are determined, the arithmetic mean (number-average) of the thus determined circle equivalent diameters is calculated and the average particle size of the filler (2) can be obtained.

The average particle size of the filler (1) may be from 10 nm to 80 nm, may be from 20 nm to 70 nm, or may be from 30 nm to 60 nm.

The average particle size of the filler (2) may be from 0.1 µm to 3.0 µm, may be from 0.3 µm to 2.5 µm, may be from 0.5 µm to 2.3 µm, or may be from 0.8 µm to 2.0 µm.

A ratio of the average particle size of the filler (2) with respect to the average particle size of the filler (1) is not particularly limited as long as it is more than 1, for example, may be from 2 to 200, may be from 5 to 100, or may be from 10 to 50.

The filler is preferably inorganic particles, and more preferably inorganic oxide particles.

The filler is still more preferably at least one selected from the group consisting of silica particles (i.e., silicon oxide particles), zirconia particles (i.e., zirconium oxide particles), aluminosilicate particles, alumina particles (i.e., aluminum oxide particles), and titania particles (i.e., titanium oxide particles).

The filler preferably contains silica particles, and the filler (1) and the filler (2) more preferably contains silica particles.

When the photocurable composition of the present disclosure contains two or more types of filler, the two or more types of fillers may be a combination of fillers which are the same type but have different average particle sizes, may be a combination of fillers which are different types but but have the same average particle sizes, or may be a combination of fillers which are different types of fillers and have different average particle sizes.

When the photocurable composition of the present disclosure contains a filler, the content of the filler is preferably from 5 parts by mass to 100 parts by mass, more preferably from 10 parts by mass to 80 parts by mass, still more preferably from 15 parts by mass to 60 parts by mass, and particularly preferably from 20 parts by mass to 50 parts by mass, with respect to 100 parts by mass of the photopolymerizable component.

When the photocurable composition of the present disclosure contains the filler (1) and the filler (2), the preferable ranges of the content of the filler (1) and the content of the filler (2) are shown below.

The content of the filler (1) is preferably from 5 parts by mas to 80 parts by mass, more preferably from 10 parts by mass to 60 parts by mass, or still more preferably from 15 parts by mass to 40 parts by mass, with respect to 100 parts by mass of the photopolymerizable component.

The content of the filler (2) is preferably from 1 parts by mas to 40 parts by mass, more preferably from 3 parts by mass to 30 parts by mass, or still more preferably from 5 parts by mass to 25 parts by mass, with respect to 100 parts by mass of the photopolymerizable component.

The ratio of the content of the filler (1) to the content of the filler (2) (filler (1):filler (2)) is preferably from 30:70 to 95:5, more preferably from 40:60 to 90: 10, and still more preferably from 50:50 to 90:10 in a mass basis.

Depending on the intended purpose, the filler may be surface-treated with a surface treatment agent such as a silane coupling agent. By the surface treatment agent, for example, wear resistance can be imparted to a cured product of the photocurable composition containing the filler.

The surface treatment agent is not particularly limited and, for example, a silane coupling agent can be used.

Examples of the silane coupling agent include organosilicon compounds, such as methacryloxyalkyltrimethoxysilane (number of carbon atoms between a methacryloxy group and a silicon atom: from 3 to 12), methacryloxyalkyltriethoxysilane (number of carbon atoms between a methacryloxy group and a silicon atom: from 3 to 12), vinyltrimethoxysilane, vinylethoxysilane, and vinyltriacetoxysilane.

### (Another component)

If necessary, the photocurable composition of the present disclosure may also contain another component in addition to the above-described component.

Examples of another component include a color material, a modifier, a stabilizer, an antioxidant, and a solvent.

The content of another component may be 10 parts by mass or less, may be 5 parts by mass or less, may be 1 part by mass or less or may be 0 parts by mass, with respect to 100 parts by mass of the photocurable composition.

### <Preferred viscosity of photocurable composition>

The photocurable composition of the present disclosure has a viscosity, which is measured by an E-type viscometer under the conditions of 25°C and 50 rpm (hereinafter, also simply referred to as "viscosity"), of preferably from 300 mPa·s to 6,000 mPa·s.

It is noted here that "rpm" means revolutions per minute (rotations per minute).

When the viscosity is from 300 mPa·s to 6,000 mPa·s, the photocurable composition has excellent ease of handling in the production of a three-dimensional modeling product by photomodeling.

The viscosity is more preferably from 300 mPa·s to 5,000 mPa·s, still more preferably from 350 mPa·s to 4,000 mPa·s, yet still more preferably from 400 mPa·s to 3,000 mPa·s, further more preferably from 450 mPa·s to 2,000 mPa·s, and still further more preferably from 500 mPa·s to 1,500 mPa·s.

### [Modification of photocurable composition of present disclosure]

A photocurable composition of modification of the present disclosure contains a photopolymerizable component, a photopolymerization initiator, and a filler, and the filler contains a filler (1) having an average particle size of 5 nm or more and less than 100 nm and a filler (2) having an average particle size of from 0.1 µm to 3.0 µm

It is possible to produce a three-dimensional modeling product that is suppressed from abrasion and discoloration upon abrasion and is resistant to whitening when washed with isopropyl alcohol by using the photocurable composition of the present modification.

Further, the photocurable composition of the modification may not satisfy the aforementioned condition that the average surface elastic modulus of the island portions of the surface B1 in the test piece A1 is 9.0 GPa or more.

The photocurable composition of the modification may not satisfy the aforementioned condition that the average surface elastic modulus of the sea portion of the surface B1 in the test piece A1 is 4.5 GPa or more.

The photocurable composition of the modification may not satisfy the aforementioned condition that the area of the island portions of the surface B1 in the test piece A1 is from 1.0% to 15.0% with respect to the entire area of the surface B1.

The photocurable composition of the modification may not satisfy the aforementioned condition that the area of the sea portion of the surface B1 in the test piece A1 is from 85.0% to 99.0% with respect to the entire area of the surface B1 (a total of the area of the island portions and the area of the sea portion is 100%).

### [Three-dimensional modeling product]

A three-dimensional modeling product of the present disclosure is a cured product of the above-described photocurable composition of the present disclosure.

Therefore, the three-dimensional modeling product of the present disclosure is a three-dimensional modeling product that is suppressed from abrasion and discoloration upon abrasion and is resistant to whitening when washed with isopropyl alcohol.

Although the three-dimensional modeling product of the present disclosure is less likely to whiten when washed with isopropyl alcohol, the washing method is not limited to the method using isopropyl alcohol, and washing may be performed by another methods. For example, the three-dimensional modeling product may be washed with a liquid such as ethanol.

### [Dental product]

A dental product of the present disclosure includes the above-described three-dimensional modeling product of the present disclosure.

Therefore, the dental product of the present disclosure is a dental product that is suppressed from abrasion and discoloration upon abrasion and is resistant to whitening when washed with isopropyl alcohol.

Specific examples of the dental product are as described above.

### EXAMPLES

Examples of the present disclosure will now be described; however, the present disclosure is not limited to the below-described Examples.

### <Preparation of photocurable compositions>

Photocurable compositions of Examples 1 to 9 and Comparative Examples 1 to 4 were each prepared by kneading the materials shown in Table 1 below using a three-roll mill.

The details of the materials (photopolymerizable components, photopolymerization initiators, and fillers) shown in Table 1 below are as follows.

In Table 1 below, the numerical values shown in the columns of the respective components used in Examples and Comparative Examples each indicate the amount (parts by mass) of each component with respect to a total of 100 parts by mass of photopolymerizable components.

### (Photopolymerizable components)

### EBECRYL 4859: urethane dimethacrylate (manufactured by Daicel-Allnex Ltd.; the structure is shown below)

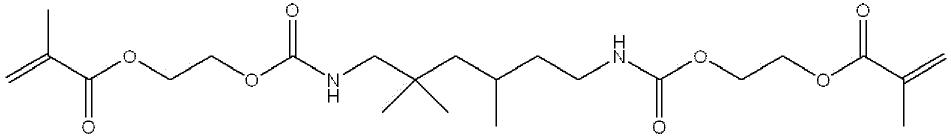

### POBA: 3-phenoxybenzyl acrylate (manufactured by Kyoeisha Chemical Co., Ltd.; the structure is shown below)

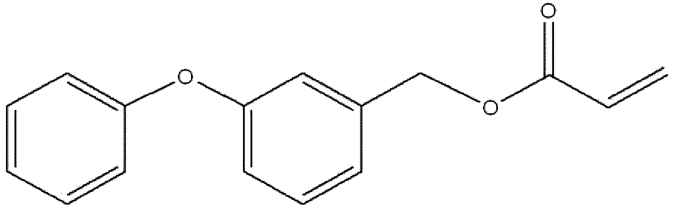

### M600A: 2-hydroxy-3-phenoxypropyl acrylate (manufactured by Kyoeisha Chemical Co., Ltd.; the structure is shown below)

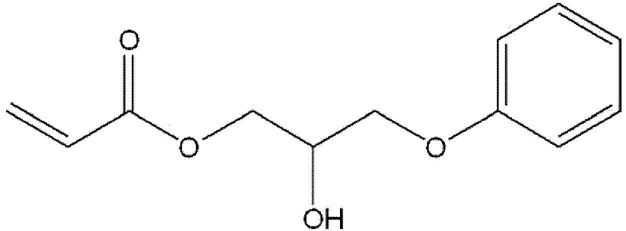

### 3EG: triethylene glycol dimethacrylate (manufactured by Kyoeisha Chemical Co., Ltd.; the structure is shown below)

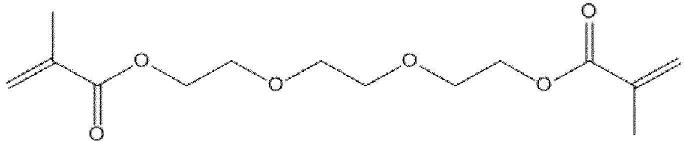

### AH-600: phenyl glycidyl ether acrylate hexamethylene diisocyanate urethane prepolymer (manufactured by Kyoeisha Chemical Co., Ltd.; the structure is shown below)

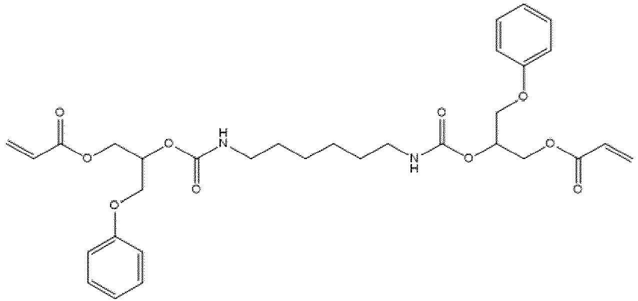

### 3EG-A: triethylene glycol diacrylate (manufactured by Kyoeisha Chemical Co., Ltd.; the structure is shown below)

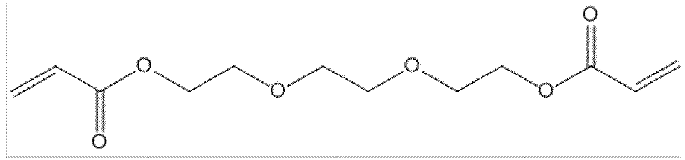

### (Photopolymerization initiator)

### TPO: acylphosphine oxide compound (specifically 2,4,6-trimethylbenzoyl-diphenyl-phosphine oxide) (OMNIRAD TPO H, manufactured by IGM Resins B.V.; the structure is shown below)

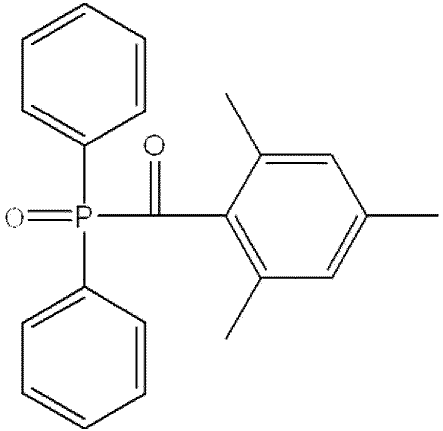

### (Fillers)

SC4500-SMJ (silica particles, average particle size: 1.0 µm, manufactured by Admatechs Co., Ltd.)
SC5500-SMJ (silica particles, average particle size: 1.5 µm, manufactured by Admatechs Co., Ltd.)
SC6500-SMJ (silica particles, average particle size: 2.0 µm, manufactured by Admatechs Co., Ltd.)
ADMANANO YA050C-SM1 (silica particles, average particle size: 50 nm, manufactured by Admatechs Co., Ltd.)

### [Examples 1 to 9, Comparative Examples 1 to 4]

### (Measurement of surface elastic modulus of test piece)

The bending elastic modulus of the surface of the cured product obtained using the photocurable compositions prepared in Examples and Comparative Examples was measured by the following method. The results are shown in Table 1.

Using a DLP type 3D printer (Kulzer, Cara Print 4.0), a 10 mm × 10 mm × 2 mm test piece was modeled using the photocurable composition to be measured, under the conditions that a lamination width was 100 µm, and each layer was exposed to visible light having a wavelength of 405 nm at 12mJ/cm². The photocureable composition was mainly cured by exposing ultraviolet light having a wavelength of 365 nm at 10 J/cm ² to the obtained test piece to obtain a cured product of test piece A.

First, prior to measurement, a cross section of the prepared test piece A1 is taken by ion milling (equipment name: EMTIC 3X, manufactured by Leica Microsystems). Thereafter, measurement was performed in the DFM mode of an AFM measuring device under the following conditions to obtain a surface shape image. Regarding the obtained surface shape image, using image analysis software (WinROOF2021, manufactured by Mitani Shoji Co., Ltd.), in one square surface B1 having an area of 3 µm on a side in the cross section, an image was obtained in which island portions having a length (maximum width) of 0.1 µm or more and sea portions consisting of the portion other than the island portions were distinguished in black and white, and the area ratio of each of the island portions and the sea portion was calculated. Thereafter, for surface B1, the average surface elastic modulus of each of the island portions and the sea portion was calculated in FCM mode. The results are shown in Table 1.

### <Measurement conditions>

Equipment: AFM-5300E (Hitachi High-Tech Science Co., Ltd.)
Measurement mode: DFM mode (surface shape image), FCM mode (surface elastic modulus image)
Cantilever: Si cantilever (with A1 coating on the back, manufactured by Hitachi High-Tech Fielding Co., Ltd., probe size: 7 nm, spring constant: 9 N/m)
Cantilever indentation depth: 10nm
Measurement environment: in the atmosphere, room temperature (25°C)
Measurement field of view: 3 µm × 3 µm

### (Washing evaluation using isopropyl alcohol (IPA))

In the cured products obtained using the photocurable compositions prepared in Examples and Comparative Examples, washing evaluation using isopropyl alcohol (IPA) was performed by the following method.

Using a DLP type 3D printer (Kulzer, Cara Print 4.0), a 10 mm × 10 mm × 2 mm test piece was modeled using the photocurable composition to be measured, under the conditions that a lamination width was 100 µm, and each layer was exposed to visible light having a wavelength of 405 nm at 12mJ/cm².

After modeling, the test piece was immersed in a container filled with isopropyl alcohol and ultrasonically washed for 5 minutes. After the test piece was taken out from the container and air-blown dried, the surface of the cured product was visually evaluated according to the following criteria.
A: No whitened portion was visually observed on the surface of the cured product.
B: It was visually confirmed that the entire surface of the cured product was whitened.

### (Viscosity of photocurable composition)

The viscosity of the obtained photocurable composition was measured by an E-type viscometer under the conditions of 25°C and 50 rpm.

As a result, the viscosity of each of the photocurable compositions of Examples 1 to 9 was in the range of from 500 mPa·s to 6000 mPa·s.

### (Measurement of Vickers hardness of test piece)

A discoid test piece A2 with a diameter of 15mm, and a thickness of 1 mm, was produced by photomodeling under conditions in which each of the photocurable compositions prepared in Examples and Comparative Example was irradiated with visible light having a wavelength of 405 nm at an irradiation dose of 12 mJ/cm² to form a cured layer A2 with a thickness of 100 µm, the cured layer A2 is stacked in a thickness direction thereof to form a discoid modeling product A2 with a diameter of 15 mm, and a thickness of 1 mm, and the modeling product A2 is irradiated with ultraviolet rays having a wavelength of 365 nm at an irradiation dose of 10 J/cm² to produce the test piece A2.

The Vickers hardness of the test piece A2 was measured in accordance with JIS T6517:2011.

Specifically, the test piece A2 was immersed in purified water at 37 ± 1°C for 24 ± 2 hours.

Subsequently, the test piece A2 was recovered from purified water, and the Vickers hardness of the light-irradiated surface (i.e., the surface of the side irradiated with light at the time of production) of the recovered test piece A2 was measured in accordance with the Vickers hardness test method prescribed in JIS Z2244 at a test force of 200 g. The thus obtained value was defined as the Vickers hardness of the test piece A2.

A micro hardness tester HMV-G (manufactured by Shimadzu Corporation) was employed as a Vickers hardness measuring device.

The Vickers hardnesses of each of the test pieces A2 in Examples 1 to 9 was 18 HV or more.

### (Measurement of bending strength and bending elastic modulus of test piece)

The bending strength and bending elastic modulus of the cured products obtained using the curable compositions prepared in the Examples and Comparative Examples were measured by the following methods. The results are shown in Table 1.

Using a DLP type 3D printer (Kulzer, Cara Print 4.0), a 25 mm × 2 mm × 2 mm test piece was modeled using the photocurable composition to be measured, under the conditions that a lamination width was 100 µm, and each layer was exposed to visible light having a wavelength of 405 nm at 12mJ/cm ². The photocureable composition was mainly cured by exposing ultraviolet light having a wavelength of 365 nm at 10 J/cm ² to obtain a cured product of test piece A3.

The obtained test piece A3 was immersed in purified water at 37 ± 1°C for 24 ± 2 hours.

Subsequently, the test piece A3 was recovered from purified water, and the bending strength of the recovered test piece A3 was measured in accordance with ISO10477:2004 at a test speed of 1 ± 0.3 mm/min.

A universal tester (manufactured by INTESCO Co., Ltd.) was employed as a bending elastic modulus measuring device.

The bending strength of each of the test pieces A3 in Examples 1 to 9 was 80 MPa or more and the bending elastic modulus of each of the test pieces A3 in Examples 1 to 9 was 3000 MPa or more.

### (Abrasion characteristics of test piece)

The abrasion characteristics of the cured products obtained by using the curable compositions prepared in Examples and Comparative Examples were measured by the following method. Table 1 shows the amount of abrasion and the degree of discoloration after abrasion.

Using a DLP type 3D printer (Kulzer, Cara Print 4.0), a 20 mm × 50 mm × 2 mm test piece was modeled using the photocurable composition to be measured, under the conditions that a lamination width was 100 µm, and each layer was exposed to visible light having a wavelength of 405 nm at 12mJ/cm². The photocureable composition was mainly cured by exposing ultraviolet light having a wavelength of 365 nm at 10 J/cm² to the obtained test piece to obtain a cured product of test piece A4. The surface of the cured product was smoothed with a polisher (water-resistant polishing paper #800 was used).

The abrasion test was performed using a 6-series abrasion tester manufactured by Tokyo Giken Co., Ltd. A hemispherical alumina bead was used as a sharpener and moved on the surface of the test piece A4 under a load of 400 g, and a suspension of poppy seeds and water (20 g of poppy seeds/40 g of water) was used as the abrasion medium. A wear test was performed while immersed in this suspension. After 200,000 cycles, the abrasion amount of the test piece was calculated as the volume (unit: mm ³) using a laser microscope from the depth profile. In addition, the ratio of the discolored portion (specifically, blackened) that was scratched by the poppy seeds was measured using a laser microscope, and calculated as the degree of discoloration (%) of the area of the discolored portion with respect to the area of the entire surface.

The abrasion amount and the degree of discoloration after the abrasion test were evaluated according to the following evaluation criteria.

### -Evaluation criteria for abrasion amount-

A: 0.40mm³ or more and 0.54mm³ less than
B: 0.54mm³ or more and 0.80mm³ less than
C: 0.80mm³ or more and 1.00mm³ less than

### -Evaluation criteria for degree of discoloration after abrasion test-

AAA: 0% or more and 0.15% or less
AA: more than 0.15% and 0.8% or less
A: more than 0.8% and 2.0% or less
B: more than 2.0% and less than 3.5%
C: 3.5% or more and 9.0% or less
D: more than 9.0% over

**[Table 1]**

| Components of photocurable composition | | Example | | | | | | | | | Comparative Example | | | |
|---|---|---|---|---|---|---|---|---|---|---|---|---|---|---|
| | | 1 | 2 | 3 | 4 | 5 | 6 | 7 | 8 | 9 | 1 | 2 | 3 | 4 |
| Photopolymerizable component | Ebecryl4859 | 60 | 60 | 60 | 60 | 60 | 60 | 60 | 70 | - | 60 | 60 | 60 | 60 |
| | POBA | 20 | 20 | 20 | 20 | 20 | 20 | 20 | - | - | 20 | 20 | 20 | 20 |
| | M600A | 20 | 20 | 20 | 20 | 20 | 20 | 20 | - | - | 20 | 20 | 20 | 20 |
| | AH-600 | - | - | - | - | - | - | - | - | 75 | | | | |
| | 3EG-A | - | - | - | - | - | - | - | - | 25 | | | | |
| | 3EG | - | - | - | - | - | - | - | 30 | - | | | | |
| Filler (1) | Admanano YA050C - SM1 (Average particle size:50nm) | 20 | 15 | 30 | 30 | 35 | 30 | 30 | 30 | 30 | - | 40 | 20 | - |
| Filler(2) | SC4500-SMJ (Average particle size: 1.0µm) | 20 | 15 | 5 | 10 | 5 | - | - | 10 | 5 | - | - | - | 30 |
| | SC5500-SMJ (Average particle size: 1.5µm) | - | - | - | - | - | 5 | - | - | - | - | - | | - |
| | SC6500-SMJ (Average particle size:2.0µm) | - | - | - | - | - | - | 5 | - | - | - | - | - | - |
| Photopolymerization initiator | TPO | 2 | 2 | 2 | 2 | 2 | 2 | 2 | 2 | 2 | 2 | 2 | 2 | 2 |
| Total amount | | 142 | 132 | 137 | 142 | 142 | 137 | 137 | 142 | 137 | 102 | 142 | 122 | 132 |
| Surface elastic modulus measurement | Average elastic modulus of sea portion (Gpa) | 6.3 | 6.0 | 5.5 | 5.2 | 6.5 | 5.8 | 5.6 | 6.3 | 5.3 | 3.5 | 7.3 | 6.5 | 3.6 |
| | Area ratio of sea portion (%) | 90.0 | 93.5 | 98.5 | 96.6 | 98.5 | 97.6 | 97.0 | 96.2 | 97.4 | 100 | 100 | 100 | 83.3 |
| | Average elastic modulus of island portions (Gpa) | 12.6 | 9.8 | 12.4 | 13.5 | 14.3 | 10.2 | 11.5 | 12.3 | 11.6 | - | - | - | 11.5 |
| | Area ratio of island portions (%) | 10.0 | 6.5 | 1.5 | 3.4 | 1.5 | 2.4 | 3.0 | 3.8 | 2.6 | - | - | - | 16.7 |
| Abrasion resistance test | Abrasion amount(mm³) | 0.50 | 0.52 | 0.48 | 0.51 | 0.46 | 0.50 | 0.48 | 0.45 | 0.52 | 0.85 | 0.54 | 0.49 | 0.56 |
| | degree of discoloration after abrasion test /% | 0.1 | 0.1 | 1.2 | 0.6 | 1.7 | 0.8 | 0.6 | 0.6 | 1.1 | 0.1 | 10.6 | 3.5 | 0 |
| Whitening after IPA washing | | No | No | No | No | No | No | No | No | No | No | No | No | Yes |

As shown in Table 1, by using the photocurable compositions prepared in Examples 1 to 9, abrasion and discoloration upon abrasion were suppressed, and it was possible to produce three-dimensional objects that were resistant to whitening when washed with IPA.

On the other hand, when the photocurable compositions prepared in Comparative Examples 1 to 4 were used, the evaluation of the abrasion amount was inferior compared to each Example. Furthermore, when the photocurable compositions prepared in Comparative Examples 2 and 3 were used, the discoloration upon abrasion was more significant than in each Example. Furthermore, when the photocurable composition prepared in Comparative Example 4 was used, whitening occurred when washed with IPA.

The present disclosure of Japanese Patent Application No. 2022-052230 filed on March 28, 2022 is hereby incorporated by reference in its entirety.

All the documents, patent applications, and technical standards that are described in the present specification are hereby incorporated by reference to the same extent as if each individual document, patent application, or technical standard is concretely and individually described to be incorporated by reference.

## Claims

1. A photocurable composition, comprising a photopolymerizable component and a photopolymerization initiator, further comprising a filler wherein:
in a case in which a square plate shaped test piece A1 with a length of 10 mm, a width of 10 mm, and a thickness of 2 mm, is produced by photomodeling under conditions in which the photocurable composition is irradiated with visible light having a wavelength of 405 nm at an irradiation dose of 12 mJ/cm² to form a cured layer A1 with a thickness of 100 µm, the cured layer A1 is stacked in a thickness direction thereof to form a square plate shaped modeling product A1 with a length of 10 mm, a width of 10 mm, and a thickness of 2 mm, and the modeling product A1 is irradiated with ultraviolet rays having a wavelength of 365 nm at an irradiation dose of 10 J/cm² to produce the test piece A1, at least one square surface B1 having an area of 3 µm on a side in at least one cross section of the test piece A1 has a sea-island structure composed of island portions comprising the filler and having a length of 0.1 µm or more, and a sea portion consisting of the portion other than the island portions,
an average surface elastic modulus of the island portions is 9.0 GPa or more,
an average surface elastic modulus of the sea portion is 4.5 GPa or more,
an area of the island portions in the surface B1 is from 1.0% to 15.0% with respect to an entire area of the surface B1, and
an area of the sea portion in the surface B1 is from 85.0% to 99.0% with respect to the entire area of the surface B1 (a total of the area of the island portions and the area of the sea portion is 100%).

2. The photocurable composition according to claim 1, wherein the filler is at least one selected from the group consisting of silica particles, zirconia particles, aluminosilicate particles, alumina particles, and titania particles.

3. The photocurable composition according to claim 1 or claim 2, wherein the filler comprises a filler (1) having an average particle size of 5 nm or more and less than 100 nm and a filler (2) having an average particle size of from 0.1 µm to 3.0 µm.

4. The photocurable composition according to any one of claims 1 to 3, wherein:
in a case in which a discoid test piece A2 with a diameter of 15 mm and a thickness of 1 mm, is produced by photomodeling under conditions in which the photocurable composition is irradiated with visible light having a wavelength of 405 nm at an irradiation dose of 12 mJ/cm² to form a cured layer A2 with a thickness of 100 µm, the cured layer A2 is stacked in a thickness direction thereof to form a discoid modeling product A2 with a diameter of 15 mm and a thickness of 1 mm, and the modeling product A2 is irradiated with ultraviolet rays having a wavelength of 365 nm at an irradiation dose of 10 J/cm² to produce the test piece A2, the test piece A2 has a Vickers hardness of 18 HV or more.

5. The photocurable composition according to any one of claims 1 to 4, wherein:
in a case in which a rectangular rod-like test piece A3 with a length of 25 mm, a width of 2 mm, and a thickness of 2 mm, is produced by photomodeling under conditions in which the photocurable composition is irradiated with visible light having a wavelength of 405 nm at an irradiation dose of 12 mJ/cm² to form a cured layer A3 with a thickness of 100 µm, the cured layer A3 is stacked in a thickness direction thereof to form a rectangular rod-like modeling product A3 with a length of 25 mm, a width of 2 mm, and a thickness of 2 mm, and the modeling product A3 is irradiated with ultraviolet rays having a wavelength of 365 nm at an irradiation dose of 10 J/cm² to produce the test piece A3, the test piece A3 has a bending strength of 80 MPa or more, and a bending elastic modulus of 3,000 MPa or more.

6. The photocurable composition according to any one of claims 1 to 5, wherein the photopolymerizable component comprises a (meth)acrylic monomer.

7. The photocurable composition according to claim 6, wherein:
the (meth)acrylic monomer comprises at least one of a monofunctional (meth)acrylic monomer or a bifunctional (meth)acrylic monomer, and
a total amount of the monofunctional (meth)acrylic monomer and the bifunctional (meth)acrylic monomer is 90% by mass or more with respect to a total amount of the (meth)acrylic monomer.

8. The photocurable composition according to claim 6 or 7, wherein the (meth)acrylic monomer comprises a bifunctional (meth)acrylic monomer.

9. The photocurable composition according to any one of claims 1 to 8, wherein a viscosity, which is measured by an E-type viscometer under the conditions of 25°C and 50 rpm, is from 300 mPa·s to 6,000 mPa·s.

10. The photocurable composition according to any one of claims 1 to 9, which is a photocurable composition for photomodeling.

11. The photocurable composition according to any one of claims 1 to 10, which is used for the production of a dental product by photomodeling.

12. A three-dimensional modeling product, which is a cured product of the photocurable composition according to any one of claims 1 to 11.

13. A dental product, comprising the three-dimensional modeling product according to claim 12.
